# FASCICULE DE BREVET EUROPEEN

(11) **EP 1 739 291 B1**
(45) Date de publication et mention de la délivrance du brevet: **31.10.2007**
(21) Numéro de dépôt: 06300552.4
(22) Date de dépôt: 02.06.2006
(51) Int. Cl.: F01N 9/00

(54) **Système d'aide à la régénération des moyens de dépollution intègres dans une ligne d'échappement d'un moteur de véhicule automobile**
System zur Regeneration von in der Abgasleitung eines Kraftfahrzeugmotors integrierten Reinigungsvorrichtungen
System for regenerating purification means which are integrated in an exhaust line of an engine of an automobile

(30) Priorité: 20.06.2005 FR 0506229
(43) Date de publication de la demande: 03.01.2007
(73) Titulaire: PEUGEOT CITROËN AUTOMOBILES S.A., 78140 Velizy Villacoublay (FR)
(72) Inventeur: Picard, Aurélie, 75018, PARIS (FR); Perrard, William, 78770, ANDELU (FR)
(74) Mandataire: Pinchon, Odile

(56) Documents cités:
- EP-A- 1 108 866
- DE-A1- 19 536 705
- US-A1- 2001 013 220
- PATENT ABSTRACTS OF JAPAN vol. 009, no. 238 (M-416), 25 septembre 1985 (1985-09-25) -& JP 60 093109 A (ISUZU JIDOSHA KK), 24 mai 1985 (1985-05-24)

## Description

La présente invention concerne un système d'aide à la régénération de moyens de dépollution intégrés dans une ligne d'échappement d'un moteur de véhicule automobile.

Plus particulièrement, l'invention se rapporte à un tel système dans lequel les moyens de dépollution comportent par exemple un filtre à particules.

Un tel filtre à particules disposé dans une ligne d'échappement d'un moteur Diesel de véhicule automobile est conçu pour piéger les particules présentes dans les gaz d'échappement du moteur.

Les particules s'accumulent alors dans ce filtre et il convient de procéder périodiquement à la combustion de celles-ci pour régénérer ce filtre.

On a alors proposé d'associer aux moyens de contrôle du fonctionnement du moteur, des moyens de prédiction de la quantité de suies piégée dans ces moyens de dépollution en fonction des conditions de fonctionnement du véhicule.

En fait, ces moyens de dépollution mettent en oeuvre des modèles de prévision de la quantité de suies émise par le moteur, basés sur des modèles de roulage ou sur des cartographies d'émission de suies. Ces modèles de prévision sont élaborés pendant la phase de développement d'un véhicule, à partir de mesures de quantités de suies sur des cycles de roulage ou bien sur banc moteur en stabilisé.

Tels moyens de dépollution sont décritent par exemple dans EP 1 108 866.

On conçoit alors que les stratégies de régénération du filtre sont basées sur une prévision de la quantité de suies émise par le moteur, mais ne résultent pas d'une mesure quantitative de suies en continu, ce qui entraîne des imprécisions sur la détermination de l'état de charge en particules du filtre.

Par ailleurs, les variations d'émissions de suies d'un moteur en fonction de son vieillissement, ne sont pas non plus prises en compte par ces modèles de prédiction. En effet, des dérives par exemple sur le circuit d'air (encrassement des conduits d'air par les gaz en provenance des circuits blow-by et EGR, encrassement du débitmètre d'air, dérives du turbo, ...) ou de carburant (dérives des injecteurs), peuvent entraîner une modification de la quantité de suies émise par le moteur. De même, les dispersions de production entre les véhicules ne peuvent pas être totalement prises en compte lors de la mise au point des modèles de prévision.

La non prise en compte de ces dérives et plus généralement une mauvaise évaluation de la quantité de suies contenue dans le filtre à particules, peuvent alors avoir des conséquences graves.

En effet, si la quantité de suies contenue dans le filtre à particules est trop importante, l'exotherme due à la combustion des suies pendant la régénération est trop important et peut entraîner la destruction du filtre à particules (micro fissures ou cassure).

Au contraire, une estimation trop faible des particules stockées dans le filtre conduit à des régénérations trop fréquentes et donc à une pénalité en surconsommation plus importante.

Il est donc primordial de pouvoir estimer le plus précisément possible la quantité de suies stockée dans le filtre à particules pour en assurer le bon fonctionnement et pour minimiser les pénalités en consommation de carburant dues aux régénérations.

Le but de l'invention est donc de résoudre ces problèmes en proposant un système d'aide permettant d'améliorer la détermination de la quantité de suies piégée et de prendre en compte les dispersions et les dérives liées au fonctionnement d'un moteur, influant sur la quantité de suies émise.

A cet effet, l'invention a pour objet un système d'aide à la régénération de moyens de dépollution intégrés dans une ligne d'échappement d'un moteur de véhicule automobile, du type comportant des moyens de contrôle du fonctionnement du moteur, comprenant des moyens de prédiction de la quantité de suies piégée dans les moyens de dépollution en fonction des conditions de fonctionnement du moteur du véhicule, caractérisé en ce qu'il comporte un capteur de suies, placé en amont des moyens de dépollution dans la ligne d'échappement, pour corriger le fonctionnement des moyens de prédiction.

Suivant d'autres caractéristiques de l'invention:
- les moyens de prédiction comportent des moyens de comparaison des quantités de suies déterminées par le capteur et par les moyens de prédiction, pour, si la différence entre ces quantités est supérieure à une valeur de seuil prédéterminée, recalibrer les moyens de prédiction sur la valeur délivrée par le capteur ;
- les moyens de comparaison sont activés une première fois lorsque le moteur du véhicule est neuf, pour corriger les dispersions de fonctionnement de ce moteur, puis régulièrement pour corriger les dérives de fonctionnement du moteur ;
- les moyens de comparaison sont activés régulièrement lorsque le véhicule a parcouru un kilométrage prédéterminé.

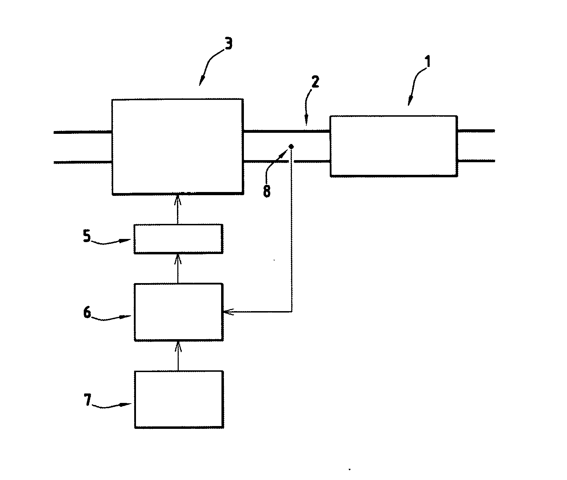

L'invention sera mieux comprise à la lecture de la description qui va suivre, donnée uniquement à titre d'exemple et faite en se référant au dessin annexé, qui représente un schéma synoptique illustrant la structure et le fonctionnement d'un système d'aide à la régénération selon l'invention.

On a en effet illustré sur cette figure, un système d'aide à la régénération de moyens de dépollution désignés par la référence générale 1, comprenant par exemple un filtre à particules et intégrés dans une ligne d'échappement 2 d'un moteur de véhicule automobile désigné par la référence générale 3, tel que par exemple un moteur Diesel.

De façon classique, un tel moteur peut être associé par exemple à un turbocompresseur et à des moyens de recirculation des gaz d'échappement en entrée de celui-ci, également appelés « système EGR ».

Le fonctionnement du moteur est contrôlé par des moyens de pilotage désignés par la référence générale 5 qui comprennent des moyens de prédiction de la quantité de suies piégée dans les moyens de dépollution en fonction des conditions de fonctionnement du moteur du véhicule.

Ces moyens sont désignés par la référence générale 6 sur cette figure et sont par exemple associés à des modèles de roulage ou à des cartographies d'émission de suies, tels que désignés par la référence générale 7 sur cette figure.

Pour résoudre les différents problèmes indiqués précédemment à propos de l'état de la technique, le système d'aide selon l'invention comporte également un capteur de suies désigné par la référence générale 8, placé en amont des moyens de dépollution 1 dans la ligne d'échappement 2, pour corriger le fonctionnement des moyens de prédiction.

En fait, plusieurs concepts de capteurs de suies peuvent être envisagés.

Les moyens de prédiction peuvent alors comporter des moyens de comparaison des quantités de suies déterminées par le capteur 8 et par les moyens de prédiction 6, 7, pour, si la différence entre ces quantités est supérieure à un seuil prédéterminé, corriger le fonctionnement des moyens de prédiction en les recalibrant sur la valeur délivrée par le capteur.

En fait, on propose donc d'utiliser un capteur de suies pour corriger les modèles de prévision au cours du temps et d'en améliorer la précision. De plus, une telle structure permet de prendre en compte la dispersion en production des moteurs de véhicules et les dérives éventuelles des différents circuits par exemple d'air et de carburant, liées au vieillissement d'un moteur et qui ont une influence sur les émissions de particules lors de leur fonctionnement.

En fait, une stratégie dans laquelle on active les moyens de comparaison une première fois lorsque le véhicule est neuf, pour corriger les dispersions de fonctionnement des moteurs, puis régulièrement pour corriger les dérives de fonctionnement de celui-ci, peut être mise en oeuvre.

Ainsi par exemple, ces moyens de comparaison peuvent être activés sur des points de fonctionnement calibrés du moteur du véhicule correspondant par exemple à des points de référence utilisés par le modèle du superviseur des moyens de dépollution, identifiés comme stabilisés par le contrôle moteur, la masse de suies mesurée par le capteur étant comparée à celle prévue par le modèle du superviseur.

Dans le cas d'un écart supérieur à une valeur prédéterminée, le modèle de prévision est corrigé de façon à ce que la valeur prévue soit identique à la valeur mesurée.

Cette stratégie de correction est alors effectuée à neuf pour apprentissage dans le but de corriger les dispersions et dans un intervalle de roulage prédéterminé comme par exemple tous les 10.000 Km parcourus par le véhicule dans le but de corriger les dérives.

On conçoit alors qu'une telle structure permet une meilleure évaluation de la quantité de suies stockée dans le filtre à particules et de minimiser les risques de fissure ou de cassure du filtre à particules, dus à une mauvaise estimation de cette quantité, de mieux évaluer les besoins en régénération, se traduisant par un gain en consommation et de mieux dimensionner le filtre à particules, se traduisant également par une réduction du coût de celui-ci.

Bien entendu, d'autres modes de réalisation encore peuvent être envisagés.

## Revendications

1. Système d'aide à la régénération de moyens de dépollution (1) intégrés dans une ligne d'échappement (2) d'un moteur (3) de véhicule automobile, du type comportant des moyens (5) de contrôle du fonctionnement du moteur, comprenant des moyens (6,7) de prédiction de la quantité de suies piégée dans les moyens de dépollution (1) en fonction des conditions de fonctionnement du moteur du véhicule, **caractérisé en ce qu**'il comporte un capteur de suies (8), placé en amont des moyens de dépollution (1) dans la ligne d'échappement, pour corriger le fonctionnement des moyens de prédiction (6,7).

2. Système selon la revendication 1, **caractérisé en ce que** les moyens de prédiction (6,7) comportent des moyens de comparaison des quantités de suies déterminées par le capteur (8) et par les moyens de prédiction (6,7), pour, si la différence entre ces quantités est supérieure à une valeur de seuil prédéterminée, recalibrer les moyens de prédiction (6,7) sur la valeur délivrée par le capteur (8).

3. Système selon la revendication 2, **caractérisé en ce que** les moyens de comparaison sont activés une première fois lorsque le moteur du véhicule est neuf, pour corriger les dispersions de fonctionnement de ce moteur, puis régulièrement pour corriger les dérives de fonctionnement du moteur.

4. Système selon la revendication 3, **caractérisé en ce que** les moyens de comparaison sont activés régulièrement lorsque le véhicule a parcouru un kilométrage prédéterminé.

## Claims

1. System for aiding the regeneration of pollution control means (1) built into an exhaust line (2) of a motor vehicle engine (3), of the type comprising means (5) for controlling the operation of the engine, comprising means (6, 7) for predicting the quantity of soot trapped in the pollution control means (1) according to the operating conditions of the vehicle engine, **characterized in that** it comprises a soot sensor (8) placed upstream of the pollution control means (1) in the exhaust line, for correcting the operation of the prediction means (6, 7).

2. System according to Claim 1, **characterized in that** the prediction means (6, 7) comprise means for comparing the quantities of soot determined by the sensor (8) and by the prediction means (6, 7), so that, if the difference between these quantities is greater than a predefined threshold value, the prediction means (6, 7) are recalibrated against the value delivered by the sensor (8).

3. System according to Claim 2, **characterized in that** the comparison means are activated a first time when the vehicle engine is new, to correct the drift in the operation of the said engine, and then regularly to correct the drifts in the operation of the engine.

4. System according to Claim 3, **characterized in that** the comparison means are activated regularly when the vehicle has travelled a predefined mileage.

## Patentansprüche

1. System zur Unterstützung der Regeneration von Reinigungsmitteln (1), die in eine Abgasleitung (2) eines Motors (3) eines Kraftfahrzeugs integriert sind, von dem Typ, der Mittel (5) zur Überprüfung des Betriebs des Motors aufweist, die Mittel (6, 7) zur Vorhersage der Menge von Rußen enthalten, die in Abhängigkeit von den Betriebsbedingungen des Motors des Fahrzeugs in den Reinigungsmitteln (1) eingefangen werden, **dadurch gekennzeichnet, dass** es einen Rußsensor (8) aufweist, der stromaufwärts vor den Reinigungsmitteln (1) in der Abgasleitung angeordnet ist, um den Betrieb der Vorhersagemittel (6, 7) zu korrigieren.

2. System nach Anspruch 1, **dadurch gekennzeichnet, dass** die Vorhersagemittel (6, 7) Vergleichsmittel der Rußmengen aufweisen, die vom Sensor (8) und von den Vorhersagemitteln (6, 7) bestimmt werden, um, wenn die Differenz zwischen diesen Mengen über einem vorbestimmten Schwellwert liegt, die Vorhersagemittel (6, 7) neu auf den vom Sensor (8) gelieferten Wert zu kalibrieren.

3. System nach Anspruch 2, **dadurch gekennzeichnet, dass** die Vergleichsmittel ein erstes Mal, wenn der Motor des Fahrzeugs neu ist, um die Betriebsstreuungen dieses Motors zu korrigieren, und dann regelmäßig aktiviert werden, um die Betriebsabweichungen des Motors zu korrigieren.

4. System nach Anspruch 3, **dadurch gekennzeichnet, dass** die Vergleichsmittel regelmäßig aktiviert werden, wenn das Fahrzeug eine vorbestimmte Anzahl von Kilometern gefahren ist.
